# NEUE EUROPÄISCHE PATENTSCHRIFT

(11) **EP 2 212 573 B2**
(45) Veröffentlichungstag und Bekanntmachung des Hinweises auf die Entscheidung über den Einspruch: **13.04.2016**
(45) Hinweis auf die Patenterteilung: 20.03.2013
(21) Anmeldenummer: 08802848.5
(22) Anmeldetag: 09.10.2008
(51) Int. Cl.: F16C 19/18, F16C 19/49, F16C 19/50, F16C 19/54, F16C 33/36, F16C 33/60, F16C 35/06

(54) **WÄLZLAGER ZUR LAGERUNG EINES NUTZFAHRZEUGRADES**
ROLLER BEARING FOR MOUNTING THE WHEEL OF A COMMERCIAL VEHICLE
PALIER À ROULEMENT POUR LE MONTAGE D'UNE ROUE DE VÉHICULE UTILITAIRE

(30) Priorität: 18.10.2007 DE 102007049982
(43) Veröffentlichungstag der Anmeldung: 04.08.2010
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); BAUMGARTNER, Johann, 85368 Moosburg (DE)
(74) Vertreter: Specht, Peter
(86) Internationale Anmeldenummer: PCT/EP2008/008539
(87) Internationale Veröffentlichungsnummer: WO 2009/052956

(56) Entgegenhaltungen:
- WO-A-85/03749
- WO-A-2005/008086
- WO-A-2007/137929
- WO-A-2009/030574
- DE-A1- 3 004 672
- DE-A1- 4 334 195
- DE-A1-102004 038 709
- DE-A1-102005 029 983
- DE-A1-102006 004 273
- DE-A1-102006 004 274
- DE-C- 465 534
- FR-A- 710 262
- US-A- 2 208 724
- US-A1- 2001 016 520
- HOFMANN: 'Das Kugelrollenlager - Weniger ist mehr]' LUK KOLLOQUIUM 2006 2006, Seiten 109 - 117

## Beschreibung

Die Erfindung betrifft ein Wälzlager, zur Lagerung eines Nutzfahrzeugrades gemäß dem Oberbegriff des Anspruchs 1.

Zur Radlagerung von schweren Nutzfahrzeugen kommen beispielsweise Kegelrollenlager zum Einsatz, die, bei relativ geringem Einbauraum, eine hohe Tragfähigkeit aufweisen und insoweit für den vorgesehenen Verwendungszweck besonders geeignet sind.

Dabei sind Radlager-Konstruktionen bekannt, bei denen die Kegelrollenlager als Einzellager ausgebildet sind, die allerdings einen relativ großen Einbauraum benötigen. Um den Platzbedarf zu reduzieren, werden neuerdings Kegelrollenlager zu sogenannten Kompakt-Radlager-Einheiten zusammengefasst, bei denen die Innenringe der Kegelrollenlager stirnseitig aneinander liegen. In Pkw-Radlagern finden solche Kompakt-Radlager-Einheiten Verwendung, bei denen zwei in O-Anordnung gestellte Schrägkugellager vorgesehen sind, die gegenüber Kegelrollenlagern jedoch eine geringere Belastbarkeit aufweisen, so dass sie für den Einsatz in schweren Nutzfahrzeugen weniger geeignet sind.

In diesem Zusammenhang sind auch sogenannte Tandem-Schräg-Kugellager zu erwähnen, bei denen die axiale Kraftabstützung im Gegensatz zu der O-Anordnung gleichgerichtet ist, wobei die Kugeln einer der beiden Kugelreihen einen größeren Durchmesser aufweisen und vielfach in einem größeren Laufkreisdurchmesser angeordnet sind als die Kugeln der anderen Kugelreihe.

Die höhere Belastbarkeit der Kegelrollenlager wird erkauft durch höhere Reibverluste gegenüber Schrägkugellagern, was zu einem entsprechend höheren Kraftstoffverbrauch führt, der beispielsweise bei einem Nutzfahrzeug mit zehn Rädern bis zu 1 % ausmacht.

Darüber hinaus führen die ungünstigen Reibwerte zu einer relativ starken Erwärmung des Wälzlagers mit der Folge, dass bei gleichzeitiger Wärmeeinwirkung durch beim Bremsen entstehende Reibwärme die Standzeit des Wälzlagers herabgesetzt wird.

Insoweit stellen die bekannten Wälzlager nur unbefriedigende Lösungen dar.

In der DE 10 2006 004274 A1 ist ein gattungsgemäßes Wälzlager geoffenbart, bei dem sowohl die inneren wie auch zugeordneten äußeren Lagerreihen als Schrägkugellager ausgebildet sind, d.h., auch die inneren Lagerreihen sind mit Kugeln bestückt.

Dies ist auch bei einer aus der WO 2005/008086 A1 bekannten Konstruktion der Fall, ebenso wie bei einer in der DE 10 2004 038709 A1 gezeigt und beschriebenen.

In jedem Fall sind die ein Lagerpaar bildenden Lagerreihen als Tandem-Schräg-Kugellager ausgebildet.

Der Erfindung liegt die Aufgabe zugrunde, ein Wälzlager der gattungsgemäßen Art so weiterzuentwikkeln, dass seine Belastbarkeit und Standzeit bei geringstem Bauraumbedarf optimiert wird.

Diese Aufgabe wird durch ein Wälzlager mit den Merkmalen des Anspruchs 1 gelöst.

Ein solches Wälzlager vereint nun die große Belastbarkeit eines Kegelrollenlagers mit der hohen Standzeit eines Kugellagers, bei gleichzeitig minimierter Bauhöhe.

Gerade für den Einsatz in schweren Nutzfahrzeugen ergeben sich wesentliche Vorteile, insbesondere hinsichtlich eines wirtschaftlichen Einsatzes.

Durch die gegenüber einem Kegelrollenlager niedrigeren Reibwerte der Schrägkugellager ist die Reparaturanfälligkeit, wie sie ansonsten durch Überhitzung gegeben ist, stark reduziert, wodurch sich naturgemäß eine Senkung der Betriebskosten ergibt.

Darüber hinaus kann der zur Verfügung zu stellende Einbauraum ineiner Radnabe relativ klein gehalten werden mit der Folge einer Gewichtseinsparung, wie sie gerade im Fahrzeugbau ständig angestrebt wird.

Nach einer vorteilhaften Weiterbildung der Erfindung sind die die inneren Lagerreihen bildenden Wälzkörper in ihrem Rollradius kleiner als die Kugeln der zugeordneten Schrägkugellager, wobei jedes äußere Schrägkugellager und die zugeordnete innere Lagerreihe einen gemeinsamen Innenring aufweist, so dass das Wälzlager insgesamt mit zwei Innenringen versehen ist.

Prinzipiell kann das Wälzlager für alle vier Lagerreihen einen gemeinsamen Außenring aufweisen. Denkbar ist aber auch, jedes einzelne Wälzlagerpaar, bestehend aus einer inneren und einer äußeren Lagerreihe, mit einem Außenring zu versehen, je nach Bauraum- bzw, Montageerfordernis.

Wie erwähnt, sind bevorzugt die Rollradien der inneren Wälzlager kleiner als die Rollradien der äußeren Wälzlager. Ergänzend hierzu kann auch der Laufkreisdurchmesser der inneren Lagerreihen kleiner sein als der der äußeren Schrägkugellager. Denkbar ist aber auch, die inneren und die äußeren Lagerreihen auf einem gleichen Laufkreisdurchmesser anzuordnen.

Zur Optimierung derradialen Tragfähigkeit sind die innen liegenden Lagerreihen als reine Radiallager ausgeführt, die zur Minimierung eines axialen Platzbedarfes als Rollkörper die Form der genannten Tonnenrollen einnehmen.

Eine passgenaue Anordnung kann durch die stirnseitig aneinander liegenden Innenringe oder mittels entsprechend dimensionierter Distanzhülsen erfolgen. Dabei erfolgt die Verbindung der beiden Innenringe mittels einer an sich bekannten Innenring-Stoßabdichtung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: ein montiertes Wälzlager nach dem Stand der Technik in einem Längsschnitt
- Figur 2: ein Ausführungsbeispiel eines erfindungsgemäßen Wälzlagers, ebenfalls in einem Längsschnitt.

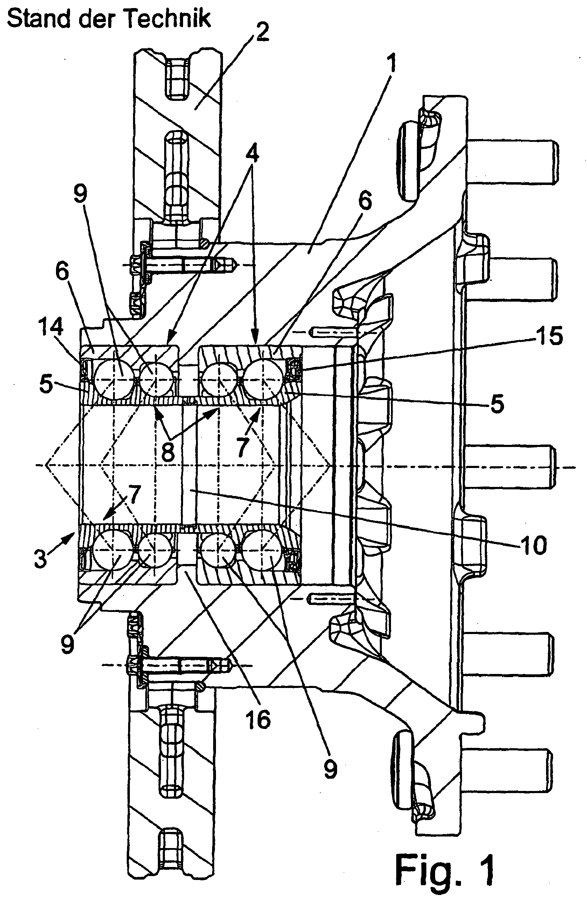

In der Figur 1 ist ein in eine Radnabe 1 eines Nutzfahrzeuges eingebautes Wälzlager 3 nach dem Stand der Technik dargestellt, wobei an der Radnabe 1 eine Bremsscheibe 2 befestigt ist.

Das Wälzlager 3 besteht aus zwei Lagerpaaren 4, die gemeinsam ein Kompakt-Wälzlager bilden. Dabei weist das Wälzlager grundsätzlich zwei Innenringe 5 auf und zwar zu jedem Lagerpaar 4 einen. Diese Innenringe 5 werden durch eine Stoßabdichtung 10 miteinander verbunden, mit der auch eine Einstellung des Lagerspiels erfolgen kann.

Nach der Figur 1 weist überdies jedes Lagerpaar 4 einen eigenen Außenring 6 auf.

Das Wälzlager 3 ist mit zwei in O-Anordnung zueinander gestellten Schrägkugellagern 7 versehen, die jeweils einen äußeren Lagerring bilden, wobei jedem Schrägkugellager 7 eine Wälzkörperreihe zugeordnet ist, die einander zugewandt liegen und innere Lagerreihen 8 bilden.

Die inneren Lagerreihen 8 sind dabei ebenfalls als Schrägkugellager ausgebildet und hinsichtlich ihrer Abstützung so angeordnet, dass sie gemeinsam mit der äußeren Lagerreihe, also dem Schrägkugellager 7 jeweils eine sogenannten Tandem-Anordnung bilden. Hierbei sind die Wälzkörper der inneren Lagerreihen 8 als Kugeln 9 ausgebildet, deren Durchmesser kleiner ist als der Durchmesser der Kugeln 9 des Schrägkugellagers 7.

Die geteilten Außenringe 6 stüfzen sich mif ihren einander zugewandten Stirnseiten an einer Ringschulter 16 der Nabe 1 ab, während die gegenüberliegenden Seiten des Wälzlagers 3 von einem Dichtring 14 bzw. einem Wellendichtring 15 verschlossen sind.

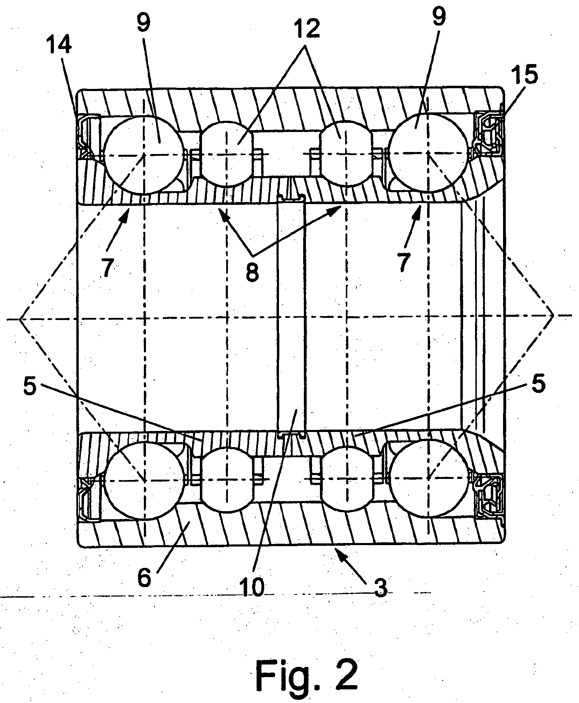

In der Figur 2 ist ein Ausführungsbeispiel gemäß der Erfindung gezeigt, bei dem die Wälzlager der inneren Lagerreihen 8 aus tonnenförmigen Rollen 12 bestehen, die im Sinne von Rillenkugellagern angeordnet sind und lediglich der Aufnahme von Radialkräften dienen. Die tonnenförmigen Rollen 12, die im Übrigen aus beidseitig abgeflachten Kugeln bestehen können, sind in ihrer Bauhöhe sehr klein gehalten, so dass sich insgesamt für den Einbau des Wälzlagers 3 ein geringer Platzbedarf ergibt. Dabei ist der Außenring 6 einteilig gestaltet.

In diesem Sinne bietet auch das Wälzlager gemäß der Figur 3 Vorteile, bei dem die inneren Lagerreihen 8 jeweils als zylinderförmige Rollen 13 ausgebildete Wälzkörper aufweisen, die gleichfalls Radialkräfte aufnehmen.

Das neue Wälzlager zeichnet sich überdies durch eine äußerst einfache Montage aus.

Hierzu werden zunächst die äußeren Lagerreihen, also die Kugeln 9 der Schrägkugellager auf den jeweiligen Innenring 5 vormontiert und die inneren Lagerreihen 8 in den Außenring 6. Danach werden die Innenringe 5 in den bzw. die Außenringe 6 eingeschoben und die Stoßabdichtung 10 montiert.

Nur durch diese getrennte Vormontage ist es möglich, die Anlageschultern der Schrägkugellager 7 soweit abdeckend an die Kugeln 9 zu legen, dass eine gewünschte große Abstützfläche wirksam wird.

### Bezugszeichenliste

- 1: Radnabe
- 2: Bremsscheibe
- 3: Wälzlager
- 4: Lagerpaar
- 5: Innenring
- 6: Außenring
- 7: Schrägkugellager
- 8: innere Lagerreihe
- 9: Kugel
- 10: Stoßabdichtung
- 11: Welle
- 12: Rolle
- 13: Rolle
- 14: Dichtring
- 15: Wellendichtring
- 16: Ringschulter

## Patentansprüche

1. Radlagerung eines Nutzfahrzeugrades, mit einem in einer eine Bremsscheibe (2) tragenden Radnabe (1) angeordneten aus zwei Lagerpaaren (4) bestehenden Wälzlager (3), das zwei in O-Anordnung zueinander gestellte äußere Schrägkugellager (7) aufweist, denen jeweils eine Wälzkörperreihe zugeordnet ist, mit einem mit dem Schrägkugellager (7) gemeinsamen Innenring (5), wobei die beiden Wälzkörperreihen einander zugewandt liegen und innere Lagerreihen (8) bilden, **dadurch gekennzeichnet, dass** die Wälzkörper der inneren, ein Radiallager bildenden Lagerreihen (8) als tonnenförmige Rollen (12) ausgebildet sind, die aus beidseitig abgeflachten Kugeln bestehen.

2. Wälzlager nach Anspruch 1, **dadurch gekennzeichnet, dass** die beiden gebildeten Lagerpaare (4) einen gemeinsamen Außenring (6) aufweisen.

3. Wälzlager nach Anspruch 1 oder 2, **dadurch gekennzeichnet, dass** jedes Lagerpaar (4) einen separaten Außenring (6) aufweist.

4. Wälzlager nach einem der vorhergehenden Ansprüche, **dadurch gekennzeichnet, dass** die Rollen (12) der inneren Lagerreihen (8) kleiner sind als die Kugeln (9) der die äußeren Lagerreihen bildenden Schrägkugellager (7).

## Claims

1. Wheel mounting of a commercial vehicle wheel, comprising a rolling bearing (3) located in a wheel hub (1) supporting a brake disc (2) and consisting of two bearing pairs (4), which rolling bearing (3) comprises two outer angular-contact ball bearings (7) in an O-shaped arrangement with respect to one another, to each of which is assigned a rolling body row, and further comprising an inner ring (5) in common with the angular contact bearing (7), wherein the two rolling body rows are arranged to face towards one another and form inner bearing rows (8), **characterised in that** the rolling bodies of the inner bearing rows (8) forming a radial bearing are designed as barrel-shaped rollers (12) composed of balls which are flattened on both sides.

2. Rolling bearing according to claim 1, **characterised in that** the two bearing pairs (4) which are formed have a common outer ring (6).

3. Rolling bearing according to claim 1 or 2, **characterised in that** each bearing pair (4) has a separate outer ring (6).

4. Rolling bearing according to any of the preceding claims, **characterised in that** the rollers (12) of the inner bearing rows (8) are smaller than the balls (9) of the angular-contact ball bearings (7) which form the outer bearing rows.

## Revendications

1. Montage de roue d'un véhicule utilitaire, comprenant un palier (3) à roulement, qui est disposé dans un moyeu (1) de roue portant un disque (2) de frein, qui est constitué de deux paires (4) de paliers et qui a deux roulements (7) extérieurs à billes à disposition oblique mis l'un par rapport à l'autre suivant un agencement en 0, comprenant une bague (5) intérieure commune aux roulements (7) à billes à disposition oblique, les deux rangées de corps de roulement étant tournées l'une vers l'autre et formant des rangées (8) intérieures de palier, **caractérisé en ce que** les corps de roulement des rangées (8) intérieures de palier formant un palier radial sont constitués sous la forme de galets (12) en barillet constitués de sphères aplaties des deux côtés.

2. Montage de roue suivant la revendication 1 ou 2, **caractérisé en ce que** les deux paires (4) de palier qui sont formées ont une bague (6) extérieure commune.

3. Montage de roue suivant l'une des revendications précédentes, **caractérisé en ce que** chaque paire (4) de paliers a une bague (6) extérieure distincte.

4. Montage de roue suivant l'une des revendications précédentes, **caractérisé en ce que** les galets (12) des rangées (8) intérieures de palier sont plus petits que les billes (9) des paliers (7) à billes à disposition oblique formant les rangées extérieures de palier.
